# EUROPEAN PATENT APPLICATION

(11) **EP 1 967 502 A2**
(43) Date of publication of application: **10.09.2008**
(21) Application number: 06824219.7
(22) Date of filing: 10.11.2006
(51) Int. Cl.: C04B 28/04, C04B 28/34

(54) **CORROSION-RESISTANT FIBRE-REINFORCED CONCRETE MIX**

(30) Priority: 11.11.2005 MX PA05012180
(71) Applicant: CONCRETOS TRANSLÚCIDOS, S. de R.L. de C.V., C.P. 01020 México D.F. (MX)
(72) Inventor: GALVÁN CÁZARES, Sergio Omar., C.P. 01020, México, D.F. (MX); SOSA GUTIÉRREZ, Joel, C.P. 01020, México, D.F. (MX)
(74) Representative: Ungria Lopez, Javier
(86) International application number: PCT/MX2006/000125
(87) International publication number: WO 2007/055557

(57) **Abstract**

A fibre-reinforced concrete mix with a high resistance to corrosion and a low volume weight, having higher mechanical strength values than those of a standard concrete and a lower volume weight. The inventive concrete is different from those currently available owing to the formulation, mix and novel mechanical behaviour of its constituents. In addition, the concrete has a longer service life than other concretes due to its resistance to chemical attack and corrosion.

## Description

### FIELD OF THE INVENTION

The present invention relates to a concrete composition containing glass fibers for improving the performance of the concrete against corrosion agents, as well as a method of manufacturing such cement.

### BACKGROUND OF THE INVENTION

Currently, concrete, plastic and metal materials are used in the construction industry to manufacture pipes to convey, store and distribute not only water but various other liquids. The concrete used for this purpose in the construction industry is generally composed of cement, water, coarse aggregate (gravel), fines (sand) and some additives to improve certain of its properties, such as workability, resistance, setting time, etc.

Studying the corrosion performance of materials is currently a priority in order to obtain substitutes or improve various materials that are today scarce and expensive in the construction industry. A lot of potable and processing water is conveyed by pipes affected by corrosion processes, whether the pipes belong to open or closed systems.

Among the main difficulties when developing not only concrete pipes, but pipes of any other material such as steel or other metal materials, is their fragility to impact, their limited usable life period, as well as their low resistance against corrosion and attack by various substances such as sulfates, acids, hydrocarbons and generally to all petroleum-derived products, such as crude oil.

With this in mind, a method was developed to manufacture fiber reinforced concrete pipes having improved mechanical properties relative to those of traditional concrete, that in addition to having a lower volumetric weight, are manufactured from glass fiber refuse (used as aggregates), cement and water, the formulation being such that it inhibits corrosion, both galvanic and anaerobic, whether the pipe is installed in an open or in a closed system.

### OBJECT OF THE INVENTION

The object of the present invention is to reveal an innovative method for manufacturing corrosion resistant fiber reinforced concrete, which characteristics are described in the description section below.

### DESCRIPTION OF THE INVENTION

The material object of the invention is a heterogeneous artificial stony material having mechanical characteristics such as compression, flexion, tension and torsion similar to those of stone and physical characteristics similar to those of a rock. This material is obtained by mixing cement, water, and fine and coarse aggregates in different proportions. The matrix or binding element chosen to manufacture this concrete - based on a mix of water and cement - is type H Portland cement. This type of cement is used in the foundations of oil wells and has a specific weight of 3.1 kg/dm³. The cement reacts with the water forming a resistant hard body called matrix that lends it the required rigidity. This matrix binds the grains of fine and coarse aggregates forming a whole. The quantity of cement to be used will be that necessary to cover the aggregates once the mixture has been hydrated with water. The water used is calculated as a water/cement ratio that must range from 0.25 to 0.55, 0.45 being the optimal ratio. The type of aggregate to use in this concrete mix is screened "breeze" type mineral coal with a water absorption capacity between 10 and 15%. The granulometry of the aggregates to be used must be no larger than five millimeters in diameter, and the proportion of particles with diameters smaller than 1 mm must be of at least 35% of the total weight of the aggregates, 45% considered as optimum proportion, of which at least 35% must be material that passes a 0.150 (100) mesh size.

The aggregate must have both a good fine particle and mineral coal powder distribution that will serve to saturate the matrix and achieve a better electrical conductivity throughout the material to create a material that can offer cathodic protection against corrosion. The required proportion of aggregates with diameter greater than 3 mm must be at least 20% and not exceed 35% of the total aggregates weight. Silver phosphate is added and affects the concrete's corrosion processes, preventing corrosion and favoring electrical conductivity and must be mixed with half the water that will be used to hydrate the cement until a good solution is obtained. The amount of silver phosphate required for this formulation varies from 0.05% to 0.8% of the total weight of the cement to be used, 0.65% considered as the optimum percentage. Iron phosphate is added and inhibits corrosion and also has an effect on the mechanical resistance and the fluidity necessary for the concrete to be workable for the right amount of time to allow it to be properly laid and compacted. The amount of iron phosphate needed for this formulation varies from 1.76% to 2.65% of the total weight of the cement to be use, 2.45% considered as the optimum percentage, although the concentration of this salt in the water to be used in the concrete it should not exceed 45500 ppm.

The phosphate must be mixed with the cement and the mineral coal before adding the water to the mix.

Glass fiber trimmings covered with polyester resin having a real density of 2.7 and a melting point above 1700° C were used instead of coarse particle aggregate to lower the volumetric weight and increase mechanical resistance. They were homogenized before using them to ensure a good distribution of the aggregate. The manufacturing process is by lamination obtained from a gun spraying process. The average length of the fibers is of 1.89 cm. The volumetric weight of the fiber is of 215 kg/m³.

Some of its main physical and chemical characteristics are: high fiber-matrix adherence (in this case the matrix is cement); electrical properties (electrical insulator); dimensional stability, incombustibility, mechanical resistance (specific resistance to traction/ density higher than steel's); can accept various binding, oiling and sizing processes, imputrescibility, has weak thermal conductivity and excessive flexibility.

The glass fibers are constituted by SiO₂ (65%), Al₂O₃ (4%), B₂O (5.5%), CaO (14%), Mg₂O (3%), K₂O (8%) and Na₂O (0.5%).

A superfluidifying agent is used as an additive which functions to increase the workability of the material and reduce the amount of water required to hydrate the cement. The amount of superfluidifying agent added must not be lower than 2% of the volume of water used and no greater than 10%, 7% being considered the optimum percentage. This superfluidifying agent must be mixed with half of the water remaining from the amount used to dilute the silver phosphate, to ensure that both the cement and the aggregates will be in contact with these substances. Any suitable superfluidifying agent may be used provided it fulfills the objective of reducing the amount of water required in the mix renders the concrete more fluid, and does not contain more than 5% of the following compounds: vinylmethyl ether, because it would favor undesirable polymerization, and boron trifluoride because it would react exothermically affecting the matrix.

The cement used in this formulation is type H Portland cement, which is very resistant to sulphates. It is mainly composed by tricalcium silicate (50%), dicalcium silicate (24%), tricalcium aluminate (11%) and tetracalcium ferroaluminate (8%) having a specific weight of 3.1.

The cement content in the mix is that used for structural application having a water/cement ratio ranging from 0.25 to 0.65, 0.45 considered as optimum proportion to obtain good workability and without having to use any other type of aggregate or additive. The curing takes 28 days at 30% relative humidity at ambient temperature.

The water used in the mix is regular water. To ensure the water used is of sufficient quality it suffices to note that it does not have any color or odor.

Dosing can be adapted to any of the existing methods provided the proportions of fiber, iron phosphate and silver phosphate as stated above are maintained.

The mixing process entails three stages. The first stage consists in homogenizing the cement, glass fibers and mineral coal contents. Then, the iron phosphate is added in a manner such that it is uniformly distributed over the surface of the mix while trying to not allow an excessive concentration in any one part. This process can be done manually or mechanically provided an appropriate dispersion of the aggregates in the matrix as well as an appropriate hydration of the cement is maintained.

Mixing time for small mixers must be 5 minutes counted after all the ingredients except the iron phosphate are placed inside the mixer, and then after those 5 minutes the iron phosphate is added trying to pour it in small quantities to facilitate the mixing process and homogenization. Once the iron phosphate has been incorporated all the ingredients must be mixed an additional one and a half minute. For large mixers, including truck mixers, the first mixing stage must last at least three and a half minutes and the second mixing stage must last at least one and a half minute.

Water is added to the mix during the second stage of the process after the silver phosphate has been diluted. Water must be added slowly during the continuous mixing process so all the solids in the mix can contact the solution. Mixing time during this stage for both small and large mixers is three and half minutes after starting to pour the silver phosphate solution to the materials already inside the mixer. After this time has passed the mix is inspected to verify whether mixing time has sufficed and whether the mix has homogenized correctly, otherwise the mix must continue to be stirred until the desired characteristics are obtained. The water and the silver phosphate must be added during the continuous mixing process, trying to ensure that the entire solution hydrates the cement by even stirring of the material that settles in the bottom of the mixer.

The water where the superfluidifying agent was diluted is added during the third mixing stage, pouring it slowly while mixing continuously to allow a proper dispersion in the mix and to assure that all materials come into contact with it, while ensuring that the solution hydrates the cement even by reaching down to the bottom of the mixer to stir well the settled materials. Mixing time for this stage is five minutes counted after starting to pour the solution over the materials in the mixer. After the five minutes are passed the mix is inspected to verify that all the materials are correctly homogenized, otherwise it must be stirred further until achieving the desired characteristics. Mixing time for large mixers including truck mounted mixers must be of at least three minutes.

Water must not be added to the concrete after mixing, except to concrete premixed in truck mixers if it does not set as expected, then water and superfluidifying agent can be added in equal proportion provided it does not exceed by 2% the amount of water used originally in the mix, followed by a mixing time equal to that of the initial mixing (or about three and half minutes).

The premixed conductive concrete must be poured from the truck within an hour and a half of mixing.

The concrete can be laid manually or mechanically. The concrete must be compacted by either tamping or vibration or any method considered appropriate for achieving the appropriate compaction provided the aggregates are not hit in a manner that will cause them to fragment or separate from the mortar mix.

The concrete made according to this formulation presents good cohesive properties that allow it to behave plastically without crumbling or without the coal particles separating from the mix, as well as displaying minimal exudation or the appearance of a film of water on the concrete's surface due to heavier solid particle settling.

This concrete, when fresh, maintains the aggregate particles surrounded by a film of slurry that separates them and lends them fluidity. The slurry is itself formed by cement particles suspended in water and saturated by the fines and the silver sulphate, that inhibits corrosion and endows it with antimicrobial properties since it does not permit the formation on the surface or in the core of the concrete of bacteria and microorganisms that would facilitate anaerobic corrosion processes, or by the reduction of sulphates or other substances. This allows saturation of the matrix, thus creating a bond between the matrix and the aggregate particles in which the carbon powder acts as a bridge that allows electrical conductivity, hence the necessity of using a superfluidifying agent that facilitates the dispersion of the aggregate fines over the entire matrix, and even on the aggregates, allowing a fluid and heterogeneous mix, that is, the grains of the aggregate fines fill the gaps between the aggregate coarse particles in such a manner that when compacted they have the maximum possible density. Therefore, the greater percentage of aggregate fines used in the making of this concrete, the lower its conductivity, since it would increase considerably the percentage of gaps in the mix, requiring more slurry in addition to having to be compacted by energetic means, the aggregate coarse particles migrate to the bottom and the small particles coated by a lot of slurry accumulate in the upper part, a fact that will diminish the conductivity and will foster cracking.

Cathodic protection is achieved by changing the direction of the current in a corrosion battery. Making an electrical connection between, for instance, the steel and the concrete, corrosion affecting the steel can be suppressed since the steel will no longer act as anode and will behave as a cathode (leaving the anode role to the more active material, which would be the concrete in this case). The iron phosphate forms a thin film both on the surface and the core of the concrete because it is perfectly mixed with the remaining materials. This protects it from later attacks and also insulates the concrete from the aggressive environment, besides providing good adherence to the reinforcing steel elements. It also favors impermeability and can insulate both the surface of steel and concrete from aggressive environments. Another advantage derived from this treatment is that it confers to the concrete the possibility of matte or polished surface finishes, so this material can also be used for decorative purposes.

The initial setting occurs generally after 2 or 2 and 1/2 hours at 23°C, while final setting takes place after 4 and 5 hours.

The curing process for this concrete must take place at ambient temperature and will last between 3 and 10 days depending on the climate's degree of humidity.

The usable life of this concrete ranges from 30 to 70 years depending on the service conditions and the attacks of chemical agents it is subjected to.

The proportion of fibers used in this concrete range from 5% - a proportion that provides an average resistance to compression of 280 MPa and an increase in the shear resistance of about 64% compared to a conventional concrete - to 40% which provides an average resistance to compression of 466 MPa and an increase in the shear resistance of about 92% compared to a conventional concrete, 20% considered as the optimum fiber content, which provides an average resistance to compression of 352.71 MPa and an increase in the shear resistance of about 84% compared to a conventional concrete. The cement/fiber ratios range from 12.94 to 1.62, 3.24 being the optimum ratio.

The modulus of elasticity for this concrete fluctuates between 28200 MPa for a 5% fiber content; 333000 MPa for a 20% fiber content and up to 372000 MPa for a 40% fiber content.

Based on the information provided above it can be stated that these characteristics pertaining to mechanical resistance to compression and volumetric weight of up to 25% less have not been achieved by any other concrete.

## Claims

1. Corrosion resistance fiber reinforced concrete mix comprising: a cement - water matrix, **characterised in that** the cement used is a type H standard Portland cement; screened breeze type mineral coal; glass fiber trimmings used as aggregates; silver phosphate and iron phosphate; and in which the cement content ranges from 52% to 72% of the total weight of the cement to be used, 63% being the optimum percentage; water content ranges from 14% to 37%, 25% being the optimum proportion; the glass fiber content ranges from 5% to 40% of the cement weight to be used, 13% being the optimum percentage; the silver phosphate content ranges from 0.05% to 0.8% of the cement weight to be used, 0.65% being the optimum percentage; the iron phosphate content ranges from 1.76% to 2.65% of the cement weight to be used, 2.455% being the optimum percentage, trying that the concentration of this salt in the water to be-used in the concrete mix does not exceed 45500ppm.

2. The corrosion resistant fiber reinforced concrete mix according to claim 1, **characterised in that** the initial setting occurs generally after 2 or 2 and 1/2 hours at 23°C, while final setting takes place after 4 and 5 hours.

3. The corrosion resistant fiber reinforced concrete mix according to claim 1, **characterised in that** the concrete has an average resistance to compression ranging from 280 MPa to 466 MPa depending on the percentage of fiber added.

4. The corrosion resistant fiber reinforced concrete mix according to claim 1, **characterised in that** the concrete has a shear resistance between 64% to 92% greater than that of traditional concrete depending on the percentage of fiber added.

5. The corrosion resistant fiber reinforced concrete mix according to claim 1, **characterised in that** the concrete has a modulus of elasticity ranging from 28200 MPa to 372000 MPa depending on the percentage of fiber added.

6. The corrosion resistant fiber reinforced concrete mix according to claim 1, **characterised in that** the concrete has a volumetric weight ranging from 1000 kg/m³ to 1400 kg/m³ depending on the percentage of fiber added.

7. Corrosion resistance fiber reinforced concrete mix according to claim 1, **characterised in that** it is resistant to the chemical attack of sulphates and is resistant to abrasion.

8. Corrosion resistance fiber reinforced concrete mix according to claim 1, **characterised in that** its mechanical capacity makes it suitable for use in the foundations of oil wells.

9. Corrosion resistance fiber reinforced concrete mix according to claim 1, **characterised in that** it has a usable life between 35 and 70 years depending on the service conditions and the chemical agents to which is subject to.
